# EUROPÄISCHE PATENTANMELDUNG

(11) **EP 1 274 184 A2**
(43) Veröffentlichungstag der Anmeldung: **08.01.2003**
(21) Anmeldenummer: 02360191.7
(22) Anmeldetag: 27.06.2002
(51) Int. Cl.: H04B 10/158, H04J 13/00

(54) **Empfänger zum Empfang von optischen Signalen**

(30) Priorität: 03.07.2001 DE 10132124
(71) Anmelder: ALCATEL, 75008 Paris (FR)
(72) Erfinder: Pfeiffer, Thomas, 70569 Stuttgart (DE)
(74) Vertreter: Menzietti, Domenico, Dipl.-Ing

(57) **Zusammenfassung**

Aufgabe der Erfindung ist es, einen optischen Empfänger für ein OCDM System bereitzustellen, der verbesserte Kompensationseigenschaften aufweist. Der erfindungsgemäße Empfänger beinhaltet zwei Filter (F1, F2), denen empfangene optische Signale zugeführt werden und die unterschiedliche Durchlassfrequenzen aufweisen. Das eine Filter (F1) ist gematched auf die zu empfangenden optischen Signale. Das andere Filter (F2) ist nicht auf die zu empfangenden optischen Signale gematched. Die vom anderen Filter (F2) durchgelassenen optischen Signale dienen als Kompensationssignale, die zur Kompensation von Störungen verwendet werden, die in den vom einen Filter (F1) durchgelassenen, gewünschten optischen Signale vorhanden sind. Auf Grund des symmetrischen Aufbaus des Empfängers mit zwei Filtern (F1, F2), zwei optisch/elektrischen Umsetzern (O/E1, O/E1) und einem Komparator (OP) wird eine optimierte Kompensation durchgeführt und der Empfänger kann in einem weiten Frequenzbereich eingesetzt werden.

## Beschreibung

Die Erfindung betrifft einen Empfänger zum Empfang von optischen Signalen.

Aus EP 0 883 254 A2 ist ein Empfänger bekannt zum Empfang von optischen Signalen aus einem optischen Übertragungsnetz zur Übertragung kodierter, gemultiplexter optischer Signale. Der Empfänger beinhaltet insbesondere ein Mittel zur Detektion der zu empfangenden optischen Signale, z.B. ein Fabry-Perot Filter, und ein Verarbeitungsmittel (z.B. zwei optisch/elektrische Umsetzer und ein Operationsverstärker) zur Kompensation der in den detektierten optischen Signalen vorhandenen Störungen durch Kombination der detektierten optischen Signale mit Kompensationssignalen. Insbesondere ist der Empfänger dadurch gekennzeichnet, daß er ein Mittel, z.B. das obige Fabry-Perot Filter, aufweist, das geeignet ist, zu empfangende optische Signale zu transmittieren und nicht zu empfangende optische Signale zu reflektieren, und daß ein weiteres Mittel, z.B. ein optischer Koppler, vorhanden ist, um zumindest aus einem Teil der reflektierten optischen Signale die Kompensationssignale abzuleiten und anschließend dem Verarbeitungsmittel zuzuführen. Der Empfänger weist den Vorteil auf, daß insbesondere das zu empfangende Signal nicht oder nur minimal im Kompensationssignal enthalten ist und daher bei der Kombination mit dem detektierten Signal den Grad der Kompensation nicht oder nur unwesentlich beeinträchtigt. Nachteilig wirkt sich aus, dass das verwendete Fabry-Perot Filter eine Asymmetrie in die Empfängeranordnung einfügt, die insbesondere bei hohen elektrischen Modulationsfrequenzen den sogenannten CMRR verschlechtert; CMRR=Common Mode Rejection Ratio.

Aufgabe der Erfindung ist es, einen optischen Empfänger bereitzustellen, der bessere Kompensationseigenschaften aufweist.

Gelöst wird diese Aufgabe durch einen Empfänger gemäß Patentanspruch 1. Der erfindungsgemäße Empfänger beinhaltet zwei Filter, denen empfangene optische Signale zugeführt werden und die unterschiedliche Durchlassfrequenzen aufweisen. Das eine Filter ist gematched auf die zu empfangenden optischen Signale. Das andere Filter ist nicht auf die zu empfangenden optischen Signale gematched. Die vom anderen Filter durchgelassenen optischen Signale dienen als Kompensationssignale, die zur Kompensation von Störungen verwendet werden, die in den vom einen Filter durchgelassenen, gewünschten optischen Signale vorhanden sind. Auf Grund des symmetrischen Aufbaus des Empfängers mit zwei Filtern, zwei optisch/elektrischen Umsetzern und einem Komparator wird eine optimierte Kompensation durchgeführt und der Empfänger kann in einem weiten Frequenzbereich eingesetzt werden. Insbesondere bei hohen Modulationsfrequenzen, z.B. 5 GHz, ist ein ausreichendes CMRR, z.B. -20dB, vorhanden.

Der Grundgedanke der Erfindung ist der, dass man einen Differenzempfänger einsetzt, um den Crosstalk ungewünschter Kanäle durch Differenzbildung zu unterdrücken. Um die Modulationstransferfunktion (MTF) beider Arme in etwa gleich zu bekommen (komplexe Modulations-Amplitude als Funktion der elektrischen Frequenz), soll in beiden Armen ein funktional identisches, aber mit etwas anderem FSR (Free Spectral Range, Freier Spektralbereich) versehenes optisches Filter eingesetzt werden. Das bewirkt, dass die Beeinflussung der MTF auf beiden Armen durch die optischen Filter etwa identisch ist, so dass die Crosstalk-Unterdrückung optimiert wird. Die Filter dürfen aber nicht exakt identisch sein, da sonst auch das gewünschte Signal unterdrückt würde.

Im folgenden wird ein Ausführungsbeispiel der Erfindung unter Zuhilfenahme von zwei Figuren erläutert. Es zeigen:
- Fig. 1: eine schematische Darstellung eines erfindungsgemäßen Empfängers und
- Fig. 2: ein CMRR Diagramm.

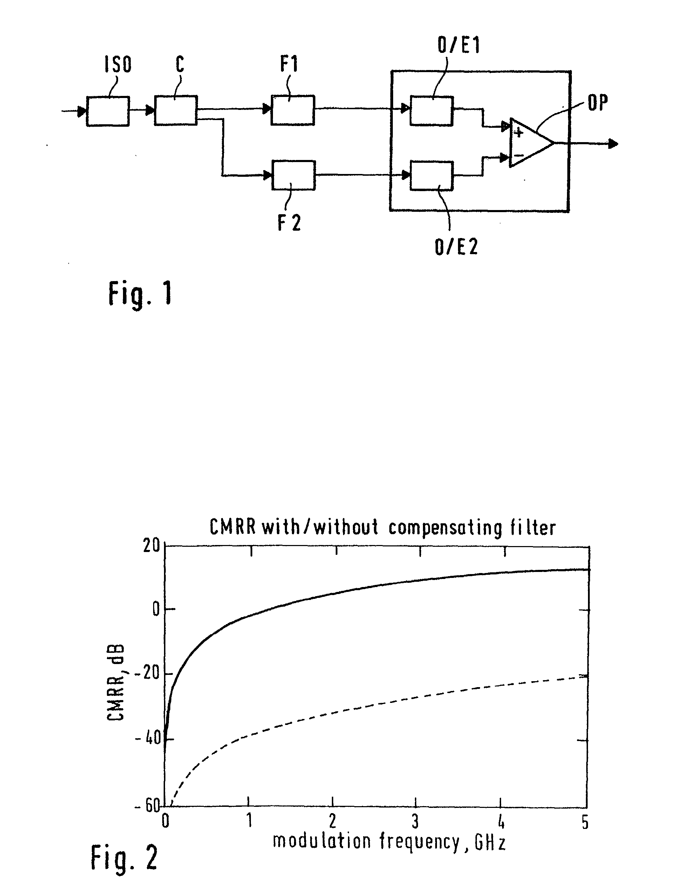

Das Ausführungsbeispiel wird nun zunächst unter Zuhilfenahme von Fig. 1 erläutert. Fig. 1 zeigt die schematische Darstellung eines erfindungsgemäßen Empfängers.

Der Empfänger wird eingesetzt in einem OCDM-System; OCDM=Optical Code Division Multiplexing, zuweilen auch bezeichnet als OCDMA = Optical Code Division Multiple Access.

Ein OCDM-System ist in der Regel als Mehrpunkt-zu-Mehrpunkt System mit mehreren Sendern und mehreren Empfängern aufgebaut und basiert auf spektraler Kodierung breitbandiger Quellen; können aber auch als Punkt-zu-Punkt, Punkt-zu-Mehrpunkt oder Mehrpunkt-zu-Punkt System aufgebaut sein. Als breitbandige Quelle wird beispielsweise eine LED verwendet, LED=Leuchtdiode. Jeder Sender sendet optische Signale, die mit mindestens einem Kode kodiert sind und jeder Empfänger empfängt optische Signale, die mit mindestens einem Kode kodiert sind. Jeder Kode repräsentiert einen optischen Übertragungskanal und wird beispielsweise durch Verwendung eines passiven optischen Filters generiert. Die optischen Signale werden auf dem Übertragungsnetz zwischen Sendern und Empfängern im überlagert übertragen, z.B. durch Verwendung eines optischen Kombiners. Durch die Überlagerung der optischen Signale kann Übersprechen einzelner Kanäle auf andere Kanäle auftreten. Dieses Übersprechen wird als Cross-Talk bezeichnet.

Der Empfänger dient dazu den Cross-Talk unerwünschter optischer Kanäle zu unterdrücken. Als Empfänger wird ein Differenzempfänger verwendet.

Der Empfänger beinhaltet eine Isolator ISO, eine Auskoppelvorrichtung C, zwei passive, optische Filter F1, F2, zwei optisch/elektrische Unsetzer O/E1, O/E2 und einen Komparator OP.

Die Auskoppelvorrichtung C ist beispielsweise als symmetrischer oder asymmetrischer optischer 3dB Koppler mit zwei Ein- und zwei Ausgängen ausgeführt. Der Komparator OP ist beispielweise als Operationsverstärker mit einem positiven und einem negativen Eingang ausgeführt. Jeder optisch/elektrische Unsetzer O/E1, O/E2 ist z.B. als Photodiode ausgeführt.

Eine erste Reihenschaltung ist gebildet durch optischen Isolator ISO, optische Auskoppelvorrichtung C, Filter F1, optisch/elektrischen Umsetzer O/E1 und positivem Eingang des Komparators OP. Eine zweite Reihenschaltung ist gebildet durch optische Auskoppelvorrichtung C, Filter F2, optisch/elektrischen Umsetzer O/E2 und negativem Eingang des Komparators OP.

Filter F1 hat eine einstellbare Durchlassfrequenz und ist z.B. als Fabry-Perot Filter oder als Mach-Zehnder Filter ausgeführt. Filter F2 hat eine einstellbare Durchlassfrequenz und ist z.B. als Fabry-Perot Filter oder als Mach-Zehnder Filter ausgeführt.

Filter F1 ist derart eingestellt, dass es die gewünschten optischen Signale durchlässt. Es ist somit gematched oder getuned auf die gewünschte Frequenz. Filter F1 empfängt somit optische Signale eines Kodes, der einem optischen Kanal entspricht. Die Durchlassfrequenz, die auch als FSR bezeichnet wird, wird beispielsweise auf 13,3 GHz eingestellt.

Filter F2 ist derart eingestellt, dass es die gewünschten optischen Signale nicht durchlässt. Es ist somit nicht gematched, mismatched oder nicht getuned auf die gewünschte Frequenz. Filter F2 ist aber auch auf keinen anderen als den gewünschten Kode oder optischen Kanal gematched, sondern hat eine Durchlassfrequenz, die zwischen den benutzten Kanälen liegt. Die Durchlassfrequenz des Filters F2 wird nahe der Durchlassfrequenz des Filters F1 eingestellt, beispielsweise auf 11,1 GHz. Filter F2 filtert somit optische Übersprechsignale, die auf Grund der Nähe im wesentlichen auch in den im Filter F1 gefilterten optischen Signalen vorhanden sind. Die gefilterten Signale können daher als Kompensationssignale verwendet werden. Nach optisch/elektrischer Umsetzung werden die in Filter F2 gefilterten Signale im Komparator OP von den im Filter F1 gefilterten Signalen subtrahiert, so dass am Ausgang des Komparators OP die gewünschten Signale mit minimierten und im Idealfall mit ausgelöschten Übersprechsignalanteilen zur Verfügung stehen.

Filter F1 und F2 sind vom gleichen Typ. Die gefilterten Übersprechsignale erfahren somit in beiden Filtern die gleiche Zeitverzögerung und die gleiche Dämpfung. Auf Grund des symmetrischen Aufbaus ist daher die Kompensation optimiert.

Das Ausführungsbeispiel wird nun weiter unter Zuhilfenahme von Fig. 2 erläutert. Fig. 2 zeigt ein CMRR Diagramm.

Der Grad der Übersprechunterdrückung wird durch das CMRR angegeben. CMRR wird ermittelt durch die Differenz der komplexen Übertragungsfunktionen in den beiden Armen des Empfängers aus Fig. 1. Auf Grund der beiden Arme und des Komparators wird der Empfänger auch als Differenz-Empfänger bezeichnet. Die komplexen Übertragungsfunktionen beinhalten Einflüsse sowohl der optischen als auch elektrischen Elemente, so z.B. von Kopplern, Filtern, Photodioden, optischen und elektrischen Verzögerungsleitungen, Dämpfungsgliedern, etc. Wenn die komplexen Übertragungsfunktionen in den beiden Armen des Empfängers sehr unterschiedlich sind, so kann es unmöglich werden das CMRR über eine bestimmte Grenze zu verbessern, so dass ein geforderte System Performance nicht erreicht werden kann. Ein Filter mit einem elektrischen Frequenzen abhängigen Übertragungsfaktor bringt eingefügt in einen Arm des Empfängers eine Asymmetrie in die Empfängeranordnung und führt zu einer Verschlechterung des CMRR, insbesondere für hohe elektrische Modulationsfrequenzen. Wenn nun in den anderen Arm des Empfängers ebenfalls ein Filter gleichen Typs eingefügt wird, kann das CMRR signifikant verbessert werden. Beide Filter haben unterschiedliche FSR. Das FSR des Filters im anderen Arm muss mit keiner der optischen Kanäle matchen. Die integrierte Übertragung des Filters ist dann unabhängig von einem Kanal Kode.

Ein numerisches Beispiel ist in Fig. 2 gezeigt. Auf der vertikalen Achse ist das CMRR in dB aufgetragen, auf der horizontalen die Modulationsfrequenz in GHz. Die obere Kurve zeigt ein CMRR ohne Kompensationsfilter, die untere, gestrichelte Kurve ein CMRR mit Kompensationsfilter. Das Filter F1 aus Fig. 1 ist beispielsweise als Mach-Zehnder Filter ausgeführt mit FSR=13,3 GHz. Ohne Filter F2 ergibt sich die obere Kurve, bei der ein CMRR von -20dB nur für Modulationsfrequenzen bis 130 MHz erreicht wird. Mit einem als Fabry-Perot Filter mit FSR= 11,1 GHz ausgeführten Filter F2 ergibt sich die untere Kurve, bei der ein CMRR von -20dB für Modulationsfrequenzen bis 5 GHz erreicht wird. Durch ein entsprechend mismatched-tes Filter F2 wird somit eine erhebliche Verbesserung des CMRR erzielt.

Die Durchlassfrequenzen des Filter sind Beispielwerte. So können für Filter F1 und F2 z.B. Durchlassfrequenzen im Bereich von 1 bis 50 GHz eingestellt werden. Die eingestellten Durchlassfrequenzen der Filter F1 und F2 unterscheiden sich beispielsweise nicht um mehr als 30%.

## Patentansprüche

1. Empfänger zum Empfang von optischen Signalen aus einem optischen Übertragungsnetz zur Übertragung kodierter, optischer Signale, insbesondere OCDM-Signale, mit einem ersten Filter (F1) zur Detektion der zu empfangenden optischen Signale und einem Verarbeitungsmittel (O/E1, O/E2, OP) zur Kompensation der in den detektierten optischen Signalen vorhandenen Störungen durch Kombination der detektierten optischen Signale mit Kompensationssignalen,
**dadurch gekennzeichnet, dass** das erste Filter (F1) geeignet ist, zu empfangende optische Signale zu transmittieren, und dass eine Auskoppelvorrichtung (C) vorhanden ist, um einen Teil der Leistung der empfangenen optischen Signale zum ersten Filter (F1) und einen anderen Teil der Leistung der empfangenen optischen Signale zu einem zweiten Filter (F2) weiterzuleiten, wobei beide Filter (F1, F2) vom gleichen Typ sind, aber unterschiedliche Durchlassfrequenzen aufweisen und aus den Ausgangssignalen des zweiten Filters (F2) die Kompensationssignale abgeleitet sind.

2. Empfänger gemäß Anspruch 1, **dadurch gekennzeichnet, dass** das Verarbeitungsmittel (O/E1, O/E2, OP) einen ersten (O/E1) und einen zweiten (O/E2) optisch/elektrischen Umsetzer und einen Komparator (OP) beinhaltet, dass das erste Filter (F1), der erste optisch/elektrische Umsetzer (O/E1) und der positive Eingang des Komparators (OP) in einer Reihenschaltung verschaltet sind, und dass das zweite Filter (F2), der zweite optisch/elektrische Umsetzer (O/E2) und der negative Eingang des Komparators (OP) in einer Reihenschaltung verschaltet sind.

3. Empfänger gemäß Anspruch 1, **dadurch gekennzeichnet, dass** das erste Filter (F1) als Fabry-Perot Filter oder als Mach-Zehnder Filter ausgeführt ist und das zweite Filter (F2) als Fabry-Perot Filter oder als Mach-Zehnder Filter ausgeführt ist.

4. Empfänger gemäß Anspruch 1, **dadurch gekennzeichnet, dass** die Durchlassfrequenzen beider Filter (F1, F2) einstellbar sind.

5. Empfänger gemäß Anspruch 4, **dadurch gekennzeichnet, dass** die Durchlassfrequenzen beider Filter (F1, F2) sich nicht um mehr als 30% voneinander unterscheiden und im Bereich von 1 bis 50 GHz liegen.
